# EUROPÄISCHE PATENTSCHRIFT

(11) **EP 4 058 304 B1**
(45) Veröffentlichungstag und Bekanntmachung des Hinweises auf die Patenterteilung: **06.03.2024**
(21) Anmeldenummer: 20789966.7
(22) Anmeldetag: 12.10.2020
(51) Int. Cl.: B60C 11/13, B60C 11/03

(54) **FAHRZEUGLUFTREIFEN**
PNEUMATIC VEHICLE TIRE
PNEUMATIQUE DE VÉHICULE

(30) Priorität: 12.11.2019 DE 102019217439
(43) Veröffentlichungstag der Anmeldung: 21.09.2022
(73) Patentinhaber: Continental Reifen Deutschland GmbH, 30165 Hannover (DE)
(72) Erfinder: SOYYUECE, Atakan, 30165 Hannover (DE); ÖZÜDURU, Ahmet, 30165 Hannover (DE)
(74) Vertreter: Continental Corporation
(86) Internationale Anmeldenummer: PCT/EP2020/078554
(87) Internationale Veröffentlichungsnummer: WO 2021/094043

(56) Entgegenhaltungen:
- EP-A1- 3 124 290
- JP-A- 2013 144 486
- US-A1- 2013 192 733
- US-A1- 2018 345 734

## Beschreibung

Die Erfindung betrifft einen Fahrzeugluftreifen mit einem Laufstreifen mit zumindest einer Profilblockreihe, welche durch sich zur axialen Richtung unter einem Winkel von bis zu 50° erstreckende, Rillenflanken aufweisende Querrillen in eine Vielzahl von Profilblöcke gegliedert ist, wobei Querrillen vorgesehen sind, in welchen jeweils eine die Tiefe der Querrille lokal verringernde, in Umfangsrichtung aufeinanderfolgende Profilblöcke aneinander anbindende Grundanhebung ausgebildet ist, wobei die Grundanhebung zumindest zwei Grundanhebungsteile unterschiedlicher maximaler Höhe aufweist.

Ein derartiger Fahrzeugluftreifen ist beispielsweise aus der EP 1 974 957 A1 bekannt. Der Laufstreifen des Reifens weist zumindest eine Profilblockreihe mit Querrillen auf, in welchen jeweils eine Grundanhebung ausgebildet ist. Die Grundanhebung setzt sich aus zumindest zwei Grundanhebungsteilen unterschiedlicher Höhe zusammen, wobei insbesondere bis zu zehn Grundanhebungsteile unterschiedlicher Höhe vorgesehen sind. Die unterschiedlich hohen Grundanhebungsteile sollen beim Fahren auf weichen Untergründen ein auf die jeweils am Untergrund vorliegende Matsch-, Schnee- bzw. Schlammmenge abgestimmtes Griffverhalten ermöglichen.

Aus der US 2013/0192733 A1 ist ein Fahrzeugluftreifen mit einem Laufstreifen mit einer durch eine Umfangsrille begrenzten, schulterseitigen Profilblockreihe mit Querrillen, in welchen bei einem Ausführungsbeispiel jeweils eine bis zu den Rillenflanken reichende Grundanhebung ausgebildet ist, bekannt. Die Grundanhebung ist aus einem an der Umfangsrille liegenden, ersten Grundanhebungsteil und einen laufstreifenaußenseitig an diesen anschließenden, zweiten Grundanhebungsteil zusammengesetzt. Der erste Grundanhebungsteil ist, im Längsschnitt der Querrille betrachtet, in radialer Richtung langgestreckt rechteckförmig. Der zweite Grundanhebungsteil ist von einer Deckfläche begrenzt, welche, im erwähnten Querschnitt betrachtet, ausgehend von der höchsten Stelle des ersten Grundanhebungsteiles zum Rillengrund der Querrille verläuft und durchgehend nach innen gewölbt ist. Ferner ist die Grundanhebung von einem in Draufsicht in Erstreckungsrichtung der Querrille verlaufenden Einschnitt durchquert, sodass jeder Grundanhebungsteil in zwei Hälften geteilt ist.

Der Erfindung liegt die Aufgabe zugrunde, bei einem Fahrzeugluftreifen der eingangs genannten Art, die Fahreigenschaften auf schneeiger Fahrbahn, insbesondere die sogenannte Schnee-Schnee-Reibung zu verbessern, wobei gute Griffeigenschaften bei Traktion in Umfangs- und in Querrichtung sichergestellt sein sollen.

Gelöst wird die gestellte Aufgabe erfindungsgemäß dadurch,
dass auf den Grundanhebungsteilen jeweils mittig zumindest eine in Erstreckungsrichtung der Querrille verlaufende und zumindest einseitig aus dem jeweiligen Grundanhebungsteil austretende Nut ausgebildet ist, welche in radialer Richtung eine Tiefe von 0,5 mm bis 3,0 mm und eine Breite von 35% bis 50% der Breite der zugehörigen Querrille aufweist.

In die Nuten auf den Grundanhebungsteilen wird beim Fahren auf Schnee oder Schneematsch Schnee hineingedrückt und verdichtet, wodurch sich durch einen ausgeprägten Effekt der Schnee-Schnee-Reibung besonders gute Traktionseigenschaften in Umfangs- und in Querrichtung erzielen lassen. Durch die zumindest zwei Grundanhebungsteile unterschiedlicher Höhe kann dieser Effekt über die Lebensdauer des Reifens bzw. bei fortschreitendem Laufstreifenabrieb gut erhalten bleiben.

Gemäß einer bevorzugten Ausführung durchquert in zumindest einem der Grundanhebungsteile die Nut den Grundanhebungsteil. In einer durchquerenden Nut kann sich - im Vergleich zu einer nicht durchquerenden Nut - eine größere Schneemenge ansammeln, was sich besonders vorteilhaft auf den Effekt der Schnee-Schnee-Reibung auswirkt.

Bei dieser Ausführung ist es bevorzugt, wenn zumindest im bzw. in den Grundanhebungsteil(en) mit der geringeren maximalen Höhe die Nut den Grundanhebungsteil durchquert. Diese Maßnahme ist für eine gute Schnee-Schnee-Reibung bei fortschreitendem Laufstreifenabrieb besonders vorteilhaft.

Gemäß einer weiteren bevorzugten Ausführung ist der Grundanhebungsteil mit der größeren maximalen Höhe mit zwei, an unterschiedlichen Seiten austretenden, insbesondere zueinander fluchtend verlaufenden Nuten versehen. In solchen als "Schneetaschen" wirkenden Sacknuten wird Schnee besonders wirkungsvoll verdichtet.

Bei dieser Ausführung ist es zudem bevorzugt, wenn die Nuten, welche an unterschiedlichen Seiten des Grundanhebungsteiles austreten, eine in die axiale Richtung projizierte Länge von 20% bis 40%, insbesondere von zumindest 30%, der in die axiale Richtung projizierten Länge des Grundanhebungsteiles aufweisen.

Eine weitere bevorzugte Ausführung ist dadurch gekennzeichnet, dass die Tiefe der Nuten bis zu 2,0 mm und die Breite der Nuten zumindest 40% der Breite der zugehörigen Querrille beträgt. Auch diese Maßnahme unterstützt gute Traktionseigenschaften in Umfangs- und in Querrichtung durch den Effekt der Schnee-Schnee-Reibung.

Die beschriebenen Effekte bleiben mit zunehmendem Abrieb des Laufstreifens besonders gut erhalten, wenn die maximale Höhe des Grundanhebungsteiles mit der größeren maximalen Höhe 40% bis 100%, insbesondere 45% bis 85%, und besonders bevorzugt zumindest 50% der Tiefe der zugehörigen Querrille beträgt und wenn die maximale Höhe des Grundanhebungsteiles mit der geringeren maximalen Höhe 20% bis 30%, insbesondere 23% bis 27%, der Tiefe der zugehörigen Querrille beträgt.

Gemäß einer weiteren bevorzugten Ausführung ist der Grundanhebungsteil mit der geringeren maximalen Höhe mit einer an den Grundanhebungsteil mit der größeren maximalen Höhe angrenzenden Vertiefung versehen, welche sich bis zu den Rillenflanken erstreckt und eine Breite von 0,7 mm bis 3,0 mm, insbesondere von 1,0 mm bis 2,0 mm, sowie eine Tiefe von 0,3 mm bis 2,0 mm, insbesondere von 0,5 mm bis 1,0 mm, aufweist.

Diese Nuten wirken als zusätzliche Schneetaschen und stellen zusätzliche Griffkanten zur Verfügung.

Bei einer weiteren bevorzugten Ausführung ist an zumindest einer, insbesondere an jeder Seite der Grundanhebung am Rillengrund der Querrille eine Vertiefung mit einer Breite von 0,7 mm bis 3,0 mm, insbesondere von 1,0 mm bis 2,0 mm, und einer Tiefe von 0,3 mm bis 2,0 mm, insbesondere von 0,5 mm bis 1,0 mm, ausgebildet ist. Auch dies ist eine Maßnahme zur Verbesserung des Schneegriffes.

Bei einer besonders bevorzugten Ausführung sind Grundanhebungen vorgesehen, welche sich jeweils aus zwei bzw. aus drei Grundanhebungsteilen unterschiedlicher maximaler Höhe zusammensetzen, wobei bei drei Grundanhebungsteilen der mittlere Grundanhebungsteil am höchsten ist.

Bei dieser Ausführung ist es von Vorteil, wenn die Grundanhebungen mit genau zwei Grundanhebungsteilen in einer Querrille einer mittleren Profilblockreihe und wenn die Grundanhebungen mit genau drei Grundanhebungsteilen in einer Querrille einer schulterseitigen Profilblockreihe ausgebildet sind.

Bevorzugt sind die Grundanhebungsteile in radialer Richtung jeweils durch eine Deckfläche begrenzt, welche in den von Nuten freien Bereichen parallel zur Laufstreifenperipherie verläuft. Diese Maßnahme begünstigt das Ansammeln von Schnee in den Nuten der Grundanhebungsteile.

Bevorzugt weist die Grundanhebung eine in die axiale Richtung projizierte Länge von 30% bis 50%, insbesondere von 25% bis 40%, der in die axiale Richtung projizierten Länge der Querrille auf.

Bei weiteren bevorzugten Ausführungen ist am Rillengrund der Querrille eine schmäler als die Querrille ausgeführte Rillengrundrille ausgebildet, welche eine Tiefe von 15% bis 25% der Tiefe der Querrille und eine Breite von 40% bis 60% der Breite der Querrille aufweist, sodass weitere Griffkanten zur Verfügung stehen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine Teilabwicklung eines Laufstreifens eines Fahrzeugluftreifen mit einer Ausführungsvariante gemäß der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linien IV-IV der Fig. 2,
Fig. 5 einen Schnitt entlang der Linie V-V der Fig. 2 und
Fig. 6 einen Schnitt entlang der Linie VI-VI der Fig. 2.

Erfindungsgemäß ausgeführte Fahrzeugluftreifen sind insbesondere Reifen in Radialbauart für Personenkraftwagen, Vans oder Light-Trucks, wobei die Reifen zum Fahren unter winterlichen Fahrbedingungen vorgesehen sind.

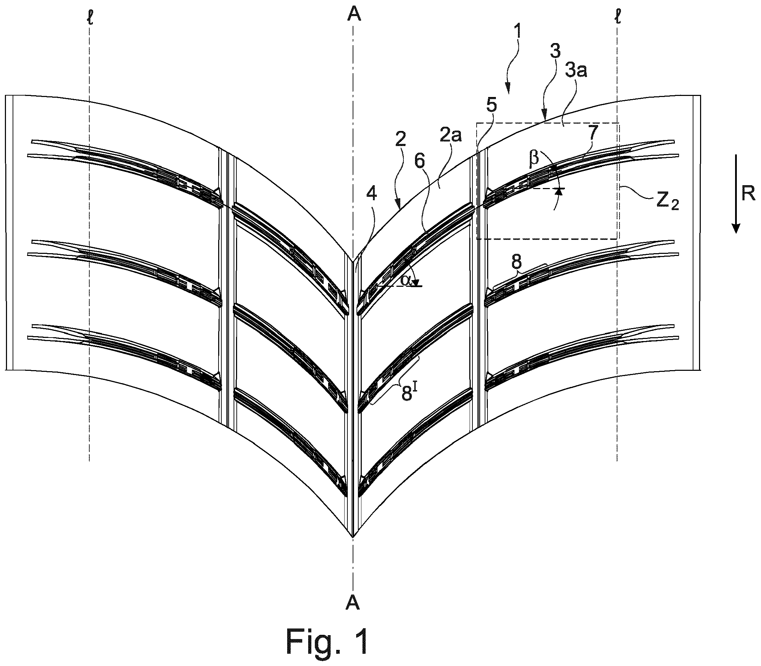

Fig. 1 zeigt einen Umfangsabschnitt eines Laufstreifens 1 eines Fahrzeugluftreifens. Der Laufstreifen 1 weist beim gezeigten Ausführungsbeispiel eine laufrichtungsgebunden ausgeführte Profilierung auf, wobei der Fahrzeugluftreifen derart am Fahrzeug zu montieren ist, dass er die durch den Pfeil R symbolisierte Abrollrichtung bei Vorwärtsfahrt aufweist. Die Äquatorialebene des Reifens ist durch eine gestrichelte Linie A-A, die seitlichen Ränder des bodenberührenden Teiles des Laufstreifens (entspricht dem statisch ermittelten Footprint gemäß E.T.R.T.O.-Standards: Last bei 70 % der maximalen Tragfähigkeit bei einem Innendruck von 85 % nach E.T.R.T.O.-Norm) sind durch gestrichelte Linien l angedeutet.

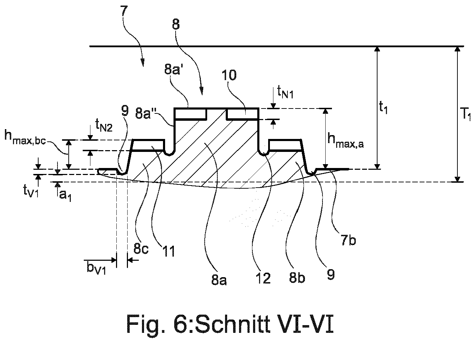

Der Laufstreifen 1 weist in jeder Laufstreifenhälfte eine mittlere Profilblockreihe 2 und eine schulterseitige Profilblockreihe 3 auf. Die mittleren Profilblockreihen 2 sind voneinander durch eine in Draufsicht gerade sowie entlang der Äquatorialebene verlaufende zentrale Umfangsrille 4 sowie von der jeweils angrenzenden schulterseitigen Profilblockreihe 3 durch eine beim gezeigten Ausführungsbeispiel in Draufsicht gerade verlaufende schulterseitige Umfangsrille 5 getrennt. Die Umfangsrillen 4, 5 sind in der jeweils vorgesehenen Profiltiefe T₁ (angedeutet in Fig. 6) ausgeführt, welche für den bevorzugten Reifentyp üblicherweise 6,5 mm bis 10,0 mm beträgt.

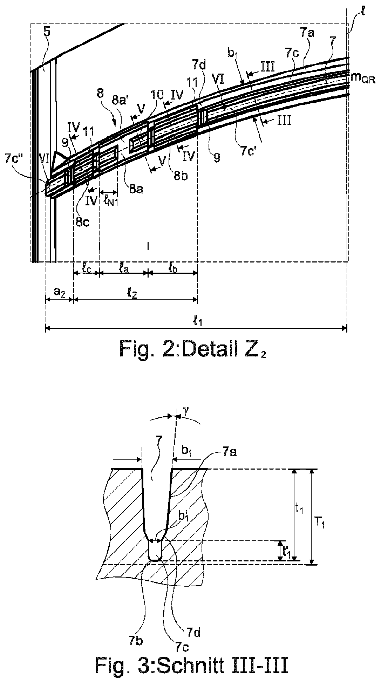

Jede mittlere Profilblockreihe 2 ist mit parallel zueinander verlaufenden, mittleren Querrillen 6, jede schulterseitige Profilblockreihe 3 ist mit parallel zueinander verlaufenden, schulterseitigen Querrillen 7 versehen, wobei sich die Querrillen 6, 7 V-förmig über die Laufstreifenbreite erstrecken. Die mittleren Querrillen 6 gliedern die mittleren Profilblockreihen 2 in mittlere Profilblöcke 2a, verlaufen leicht bogenförmig sowie zur axialen Richtung unter einem Winkel α von 30° bis 55°, insbesondere von zumindest 45°. Die schulterseitigen Querrillen 7 gliedern die schulterseitigen Profilblockreihen 3 in schulterseitige Profilblöcke 3a, verlaufen ebenfalls leicht bogenförmig sowie zur axialen Richtung unter einem Winkel β von 5° bis 20°. Die Winkel α und β der Querrillen 6, 7 beziehen sich jeweils auf eine dem Rillenverlauf folgende und daher gebogene Mittellinie m_{QR} (in Fig. 2 für eine Querrille 7 gezeigt) und sind relativ zu einer lokal an die Mittellinie m_{QR} angelegten Tangente ermittelt.

In jeder schulterseitigen Querrille 7 ist innerhalb der Bodenaufstandsfläche eine Grundanhebung 8, in jeder mittleren Querrille 6 ist eine Grundanhebung 8^{I} ausgebildet, wobei die Grundanhebungen 8, 8^{I} die jeweiligen Profilblöcke 2a, 3a aneinander anbinden und somit die Tiefe der Querrille 6, 7 lokal verringern. Nachfolgend wird die weitere Ausgestaltung einer schulterseitigen Querrille 7 und einer Grundanhebung 8 anhand von Fig. 2 sowie den zugehörigen Schnitten in Fig. 3 bis Fig. 6 weiter erläutert. Im Anschluss wird auf die Unterschiede der Grundanhebung 8^{I} gegenüber der Grundanhebung 8 eingegangen.

Gemäß Fig. 2 und Fig. 3 weist die schulterseitige Querrille 7 zwei Rillenflanken 7a und im Bereich außerhalb der Grundanhebung 8 einen im Querschnitt U-förmigen Rillengrund 7b auf (Fig. 3). Die Querrille 7 weist an der Laufstreifenperipherie eine senkrecht zu ihrer Mittellinie m_{QR} ermittelte Breite b₁ von 5,0 mm bis 8,0 mm, im Bereich des Rillengrundes 7b eine in radialer Richtung ermittelte maximale Tiefe t₁ (Fig. 3, Fig. 6) und eine innerhalb der Bodenaufstandsfläche ermittelte, auf die Mittellinie m_{QR} bezogene, in die axiale Richtung projizierte Länge l₁ auf. Die maximale Tiefe t₁ der Querrille 7 ist um 0,5 mm bis 2,0 mm geringer ist als die Profiltiefe T₁ (Fig. 3, Fig. 6).

Gemäß Fig. 3 verlaufen die Rillenflanken 7a, im Querschnitt der Querrille 7 betrachtet, zur radialen Richtung unter einem Winkel γ von 0° bis 7°, insbesondere von 1,5° bis 6°, wobei die Winkel γ der beiden Rillenflanken 7a übereinstimmen oder voneinander abweichen und wobei die Rillenflanken 7a in insbesondere bekannter Weise ausgeführte, zur Laufstreifenperipherie verlaufende Fasen, Rundungen oder dergleichen aufweisen können, wobei diese bei der Ermittlung der Breite b₁ der Querrille 7 unberücksichtigt bleiben. Am Rillengrund 7b ist eine schmäler als die Querrille 7 ausgeführte, im Querschnitt der Querrille 7 U-förmig Rillengrundrille 7c ausgebildet, wobei zwischen den Rillenflanken 7a und dem Rillengrund 7b schräge oder gerundete, zur Rillengrundrille 7c abfallende Übergangsflanken 7d verlaufen. Die Rillengrundrille 7c weist in radialer Richtung eine Tiefe t₁' von 15% bis 25% der Tiefe t₁ und am radial äußeren Ende ihrer U-Schenkel eine Breite b₁' von 40% bis 60% der Breite b₁ der Querrille 7 auf und ist bedingt durch die Grundanhebung 8 in einen laufstreifenaußenseitigen Rillengrundrillenabschnitt 7c' und einen laufstreifeninnenseitigen Rillengrundrillenabschnitt 7c" geteilt (Fig. 2).

Gemäß Fig. 2 setzt sich die Grundanhebung 8 aus einem Grundanhebungsteil 8a, einem laufstreifenaußenseitigen, seitlichen Grundanhebungsteil 8b und einem laufstreifeninnenseitigen, seitlichen Grundanhebungsteil 8c zusammen. An jeder Seite der Grundanhebung 8 befindet sich eine an den jeweiligen seitlichen Grundanhebungsteil 8b, 8c angrenzende, am Rillengrund 7b ausgebildete Vertiefung 9, an welche der laufstreifenaußenseitige Rillengrundrillenabschnitt 7c' bzw. der laufstreifeninnenseitige Rillengrundrillenabschnitt 7c" endet. Wie Fig. 6 zeigt, sind die Vertiefungen 9, im Längsschnitt der Querrille 7 betrachtet, U-förmig ausgeführt, weisen eine Breite b_{V1} von 0,7 mm bis 3,0 mm, insbesondere von 1,0 mm bis 2,0 mm, eine Tiefe t_{V1} von 0,3 mm bis 2,0 mm, insbesondere von 0,5 mm bis 1,0 mm sowie vorzugsweise zum Niveau der Profiltiefe T₁ einen radialen Abstand a₁ von 1,0 mm bis 2,0 mm auf.

Wie Fig. 2 ferner zeigt, weist die Grundanhebung 8 eine an ihrer Basis ermittelte, auf die Mittelinie m_{QR} bezogene und in die axiale Richtung projizierte Länge l₂ von 30% bis 50%, insbesondere von 35% bis 45%, der in die axiale Richtung projizierten Länge l₁ der Querrille 7 auf. Der Grundanhebungsteil 8a weist eine Länge lₐ, der seitliche Grundanhebungsteil 8b eine Länge l_{b} und der seitliche Grundanhebungsteil 8c eine Länge l_{c} auf, wobei die Längen lₐ, l_{b}, l_{c} auf analoge Weise zur Länge l₁ der Querrille 7 ermittelt sind. Die Länge lₐ des Grundanhebungsteiles 8a und die Länge l_{b} des seitlichen Grundanhebungsteiles 8b beträgt jeweils 33% bis 45% der Länge l₁ der Querrille 7, die Länge l_{c} des seitlichen Grundanhebungsteiles 8c ist beim gezeigten Ausführungsbeispiel kleiner als die Länge lₐ, l_{b}. Die Grundanhebung 8 weist zur jeweiligen schulterseitigen Umfangsrille 5 einen auf die Mittelinie m_{QR} bezogenen, in die axiale Richtung projizierten Abstand a₂ von 2,0 bis 3,0 mm auf.

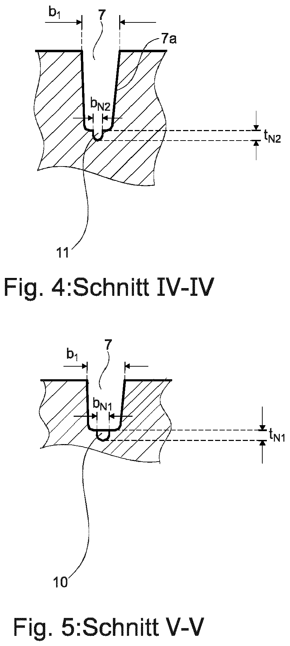

Gemäß Fig. 6 ist der Grundanhebungsteil 8a quaderförmig und weist gegenüber dem Niveau des Rillengrundes 7b (=Tiefe t₁) eine in radialer Richtung ermittelte maximale Höhe h_{max, a} von 40% bis 100%, insbesondere von 45% bis 85%, und besonders bevorzugt von zumindest 50% der Tiefe t₁ auf. Der Grundanhebungsteil 8a ist in radialer Richtung durch eine Deckfläche 8a` sowie ferner durch zwei in radialer Richtung verlaufende Seitenflächen 8a" begrenzt. Auf der Deckfläche 8a` sind zwei Nuten 10 ausgebildet, welche von den verschiedenen Seitenflächen 8a" ausgehen, miteinander fluchten, zu den Rillenflanken 7a übereinstimmend beabstandet und durch einen Steg getrennt sind (Fig. 2). Die Nuten 10 verleihen der Deckfläche 8a` eine in Draufsicht und in Erstreckungsrichtung der Querrille 7 betrachtet H-förmige Gestalt (Fig. 2), wobei die Deckfläche 8a` in den von Nuten 10 freien Bereichen parallel zur Laufstreifenperipherie ausgerichtet ist. Wie Fig. 5 zeigt, sind die Nuten 10, im Querschnitt der Querrille 7 betrachtet, U-förmig ausgeführt und weisen eine Breite b_{N1} von 35% bis 50%, insbesondere von zumindest 40%, der Breite b₁ der Querrillen 7, eine in radialer Richtung ermittelte Tiefe t_{N1} von 0,5 mm bis 3,0 mm, insbesondere von bis zu 2,0 mm, und eine in die axiale Richtung projizierte Länge I_{N1} (Fig. 2) von 20% bis 40%, insbesondere von zumindest 30%, der Länge lₐ (Fig. 2) des Grundanhebungsteiles 8a auf.

Gemäß Fig. 6 weisen die seitlichen Grundanhebungsteile 8b, 8c gegenüber dem Niveau des Rillengrundes 7b eine maximale Höhe h_{max,bc} von 20% bis 30%, insbesondere von 23% bis 27%, der Tiefe t₁ auf. Wie Fig. 2 zeigt, ist auf den Grundanhebungsteilen 8b, 8c jeweils mittig eine im Querschnitt U-förmige Nut 11 (Fig. 5) ausgebildet, welche von den Rillenflanken 7a übereinstimmend beabstandet ist, den jeweiligen Grundanhebungsteil 8b, 8c in Erstreckungsrichtung der Querrille 7 durchquert, eine Breite b_{N2} (Fig. 4) von 35% bis 50% der Breite b₁ der Querrille 7 und in radialer Richtung eine Tiefe t_{N2} (Fig. 4) von 0,5 mm bis 3,0 mm insbesondere von bis zu 2,0 mm, aufweist. Wie Fig. 6 zeigt, sind die seitlichen Grundanhebungsteile 8b, 8c beim gezeigten Ausführungsbeispiel mit einer an den mittleren Grundanhebungsteil 8a angrenzenden Vertiefung 12 versehen, deren Querschnitt, Breite und Tiefe mit jener der Vertiefung 9 übereinstimmt und welche sich zwischen den Rillenflanken 7a und daher zwischen den schulterseitigen Profilblöcken 3a erstrecken.

Die bereits erwähnte, in Fig. 1 gezeigte, jeweils in einer mittleren Querrille 6 vorgesehene Grundanhebung 8^{I} ist eine Variante der Grundanhebung 8. Sie unterscheidet sich von dieser insbesondere dadurch, dass sie sich nur aus zwei Grundanhebungsteilen zusammensetzt, von welchen der eine analog zum mittleren Grundanhebungsteil 8a und der andere analog zum seitlichen Grundanhebungsteil 8b ausgeführt ist. Beim gezeigten Ausführungsbeispiel weist jede Grundanhebung 8^{I} zur zentralen Umfangsrille 4 einen geringeren Abstand als zur jeweiligen schulterseitigen Umfangsrille 5 auf.

Beim gezeigten Ausführungsbeispiel sind darüber hinaus an einigen Eckbereichen der Profilblöcke 2a, 3a abschrägende, in Fig. 1 und Fig. 2 nicht bezifferte Eckfasen ausgebildet, welche in insbesondere bekannter Weise ausgeführt und nicht Bestandteil der Erfindung sind.

Die Erfindung ist auf die beschriebenen Ausführungsbeispiele nicht beschränkt.

Beispielsweise kann der Grundanhebungsteil 8a nur eine der Nuten 10 aufweisen. Die Vertiefungen 9, 12 sowie die im Bereich außerhalb der Grundanhebung 8, 8^{I} verlaufende Rillengrundrille 7c sind optional. Der Reifen weist zumindest eine Profilblockreihe mit Grundanhebungen enthaltenden Querrillen auf.

### Bezugsziffernliste

- 1: Laufstreifen
- 2: mittlere Profilblockreihe
- 2a: mittlerer Profilblock
- 3: schulterseitige Profilblockreihe
- 3a: schulterseitiger Profilblock
- 4: zentrale Umfangsrille
- 5: schulterseitige Umfangsrille
- 6: mittlere Querrille
- 7: schulterseitige Querrille
- 7a: Rillenflanke
- 7b: Rillengrund
- 7c: Rillengrundrille
- 7c`, 7c": Rillengrundrillenabschnitt
- 7d: Übergangsflanke
- 8, 8^{I}: Grundanhebung
- 8a: Grundanhebungsteil
- 8a': Deckfläche
- 8a": Seitenfläche
- 8b: seitlicher Grundanhebungsteil
- 8c: seitlicher Grundanhebungsteil
- 9: Vertiefung
- 10, 11: Nut
- 12: Vertiefung
- A-A: Linie (Äquatorialebene)
- a₁, a₂: Abstand
- b₁, b₁', b_{V1}, b_{N1}, b_{N2}: Breite
- hₘₐₓ, a, hₘₐₓ, _{bc}: maximale Höhe
- l₁, l₂, lₐ, l_{b}, l_{c}, l_{N1}: Länge
- l: Linie (seitlicher Rand der Bodenaufstandsfläche)
- m_{QR}: Mittellinie
- R: Pfeil (Abrollrichtung)
- T₁: Profiltiefe
- t₁: maximale Tiefe
- t₁', t_{V1}, t_{N1}, t_{N2}: Tiefe
- α, β, γ: Winkel

## Patentansprüche

1. Fahrzeugluftreifen mit einem Laufstreifen mit zumindest einer Profilblockreihe (2, 3), welche durch sich zur axialen Richtung unter einem Winkel (α, β) von bis zu 50° erstreckende, Rillenflanken (7a) aufweisende Querrillen (6, 7) in eine Vielzahl von Profilblöcke (2a, 3a) gegliedert ist, wobei Querrillen (6, 7) vorgesehen sind, in welchen jeweils eine die Tiefe (t₁) der Querrille (6, 7) lokal verringernde, in Umfangsrichtung aufeinanderfolgende Profilblöcke (2a, 3a) aneinander anbindende Grundanhebung (8, 8^{I}) ausgebildet ist, wobei die Grundanhebung (8, 8^{I}) zumindest zwei Grundanhebungsteile (8a, 8b, 8c) unterschiedlicher maximaler Höhe (hₘₐₓ, ₐ, hₘₐₓ, _{bc}) aufweist,
**dadurch gekennzeichnet,**
**dass** auf den Grundanhebungsteilen (8a, 8b, 8c) jeweils mittig zumindest eine in Erstreckungsrichtung der Querrille (6, 7) verlaufende und zumindest einseitig aus dem jeweiligen Grundanhebungsteil (8a, 8b, 8c) austretende Nut (10, 11) ausgebildet ist, welche in radialer Richtung eine Tiefe (t_{N1}, t_{N2}) von 0,5 mm bis 3,0 mm und eine Breite (b_{N1}, b_{N2}) von 35% bis 50% der Breite (b₁) der zugehörigen Querrille (6, 7) aufweist.

2. Fahrzeugluftreifen nach Anspruch 1, **dadurch gekennzeichnet, dass** in zumindest einem der Grundanhebungsteile (8b, 8c) die Nut (11) den Grundanhebungsteil (8b, 8c) durchquert.

3. Fahrzeugluftreifen nach Anspruch 2, **dadurch gekennzeichnet, dass** zumindest im bzw. in den Grundanhebungsteil(en) (8b, 8c) mit der geringeren maximalen Höhe (h_{max, bc}) die Nut (11) den Grundanhebungsteil (8b, 8c) durchquert.

4. Fahrzeugluftreifen nach einem der Ansprüche 1 bis 3, **dadurch gekennzeichnet, dass** der Grundanhebungsteil (8a) mit der größeren maximalen Höhe (hₘₐₓ, ₐ) mit zwei, an unterschiedlichen Seiten austretenden, insbesondere zueinander fluchtend verlaufenden Nuten (10) versehen ist.

5. Fahrzeugluftreifen nach Anspruch 4, **dadurch gekennzeichnet, dass** die Nuten (10), welche an unterschiedlichen Seiten des Grundanhebungsteiles (8a) austreten, eine in die axiale Richtung projizierte Länge (I_{N1}) von 20% bis 40%, insbesondere von zumindest 30%, der in die axiale Richtung projizierten Länge (lₐ) des Grundanhebungsteiles (8a) aufweisen.

6. Fahrzeugluftreifen nach einem der Ansprüche 1 bis 5, **dadurch gekennzeichnet, dass** die Tiefe der Nuten (10, 11) bis zu 2,0 mm und die Breite (b_{N1}, b_{N2}) der Nuten (10, 11) zumindest 40% der Breite (b₁) der zugehörigen Querrille (6, 7) beträgt.

7. Fahrzeugluftreifen nach einem der Ansprüche 1 bis 6, **dadurch gekennzeichnet, dass** die maximale Höhe (hₘₐₓ, ₐ) des Grundanhebungsteiles (8a) mit der größeren maximalen Höhe (hₘₐₓ, ₐ) 40% bis 100%, insbesondere 45% bis 85%, und besonders bevorzugt zumindest 50% der Tiefe (t₁) der zugehörigen Querrille (6, 7) beträgt und
dass die maximale Höhe (h_{max, bc}) des Grundanhebungsteiles (8b, 8c) mit der geringeren maximalen Höhe (h_{max, bc}) 20% bis 30%, insbesondere 23% bis 27%, der Tiefe (t₁) der zugehörigen Querrille (6, 7) beträgt.

8. Fahrzeugluftreifen nach einem der Ansprüche 1 bis 7, **dadurch gekennzeichnet, dass** der Grundanhebungsteil (8b, 8c) mit der geringeren maximalen Höhe (hₘₐₓ, _{bc}) mit einer an den Grundanhebungsteil (8a) mit der größeren maximalen Höhe (hₘₐₓ, ₐ) angrenzenden Vertiefung (12) versehen ist, welche sich bis zu den Rillenflanken (7a) erstreckt und eine Breite von 0,7 mm bis 3,0 mm, insbesondere von 1,0 mm bis 2,0 mm, sowie eine Tiefe von 0,3 mm bis 2,0 mm, insbesondere von 0,5 mm bis 1,0 mm, aufweist.

9. Fahrzeugluftreifen nach einem der Ansprüche 1 bis 8, **dadurch gekennzeichnet, dass** an zumindest einer, insbesondere an jeder Seite der Grundanhebung (8, 8') am Rillengrund (7b) der Querrille (6, 7) eine Vertiefung (9) mit einer Breite (b_{V1}) von 0,7 mm bis 3,0 mm, insbesondere von 1,0 mm bis 2,0 mm, und einer Tiefe (t_{V1}) von 0,3 mm bis 2,0 mm, insbesondere von 0,5 mm bis 1,0 mm, ausgebildet ist.

10. Fahrzeugluftreifen nach einem der Ansprüche 1 bis 9, **dadurch gekennzeichnet, dass** Grundanhebungen (8^{I}) vorgesehen sind, welche sich jeweils aus zwei Grundanhebungsteilen unterschiedlicher maximaler Höhe zusammensetzen.

11. Fahrzeugluftreifen nach einem der Ansprüche 1 bis 10, **dadurch gekennzeichnet, dass** Grundanhebungen (8) vorgesehen sind, welche sich jeweils aus drei Grundanhebungsteilen (8a, 8b, 8c) zusammensetzen, wobei der mittlere Grundanhebungsteil (8b) am höchsten ist.

12. Fahrzeugluftreifen nach Anspruch 10 und 11, **dadurch gekennzeichnet,**
**dass** die Grundanhebungen (8^{I}) mit genau zwei Grundanhebungsteilen in einer Querrille (6) einer mittleren Profilblockreihe (2) und
**dass** die Grundanhebungen (8) mit genau drei Grundanhebungsteilen (8a, 8b, 8c) in einer Querrille (7) einer schulterseitigen Profilblockreihe (3) ausgebildet sind.

13. Fahrzeugluftreifen nach einem der Ansprüche 1 bis 12, **dadurch gekennzeichnet, dass** die Grundanhebungsteile (8a, 8b, 8c) in radialer Richtung jeweils durch eine Deckfläche (8a') begrenzt sind, welche in den von Nuten (10, 11) freien Bereichen parallel zur Laufstreifenperipherie verläuft.

14. Fahrzeugluftreifen nach einem der Ansprüche 1 bis 13, **dadurch gekennzeichnet, dass** die Grundanhebung (8, 8^{I}) eine in die axiale Richtung projizierte Länge (l₂) von 30% bis 50%, insbesondere von 25% bis 40%, der in die axiale Richtung projizierten Länge (l₁) der Querrille (6, 7) aufweist.

15. Fahrzeugluftreifen nach einem der Ansprüche 1 bis 14, **dadurch gekennzeichnet, dass** am Rillengrund (7b) der Querrille (6, 7) eine schmäler als die Querrille (6, 7) ausgeführte Rillengrundrille (7c) ausgebildet ist, welche eine Tiefe (t₁') von 15% bis 25% der Tiefe (t₁) der Querrille (7) und eine Breite (b₁') von 40% bis 60% der Breite (b₁) der Querrille (7) aufweist.

## Claims

1. Pneumatic vehicle tyre having a tread with at least one profile block row (2, 3) which is divided into a multiplicity of profile blocks (2a, 3a) by transverse channels (6, 7) having channel flanks (7a) which extend at an angle (α, β) of up to 50° with respect to the axial direction, wherein transverse channels (6, 7) are provided, in each of which there is formed a base elevation (8, 8^{I}) which locally reduces the depth (t₁) of the transverse channel (6, 7) and which connects successive profile blocks (2a, 3a) in a circumferential direction to one another, wherein the base elevation (8, 8^{I}) has at least two base elevation parts (8a, 8b, 8c) of different maximum height (hₘₐₓ, ₐ, hₘₐₓ, _{bc}),
**characterized**
**in that**, centrally on each of the base elevation parts (8a, 8b, 8c), there is formed at least one groove (10, 11) which runs in the direction of extent of the transverse channel (6, 7) and which emerges from the respective base elevation part (8a, 8b, 8c) at least on one side and which has a depth (t_{N1}, t_{N2}) of 0.5 mm to 3.0 mm and a width (b_{N1}, b_{N2}) of 35% to 50% of the width (b₁) of the associated transverse channel (6, 7) in the radial direction.

2. Pneumatic vehicle tyre according to Claim 1, **characterized in that**, in at least one of the base elevation parts (8b, 8c), the groove (11) extends all the way through the base elevation part (8b, 8c).

3. Pneumatic vehicle tyre according to Claim 2, **characterized in that**, at least in the base elevation part(s) (8b, 8c) with the smaller maximum height (hₘₐₓ, _{bc}), the groove (11) extends all the way through the base elevation part (8b, 8c).

4. Pneumatic vehicle tyre according to any one of Claims 1 to 3, **characterized in that** the base elevation part (8a) with the greater maximum height (hₘₐₓ, ₐ) is provided with two grooves (10) which emerge on different sides and which run in particular in alignment with one another.

5. Pneumatic vehicle tyre according to Claim 4, **characterized in that** the grooves (10) which emerge on different sides of the base elevation part (8a) have a length (I_{N1}), projected into the axial direction, of 20% to 40%, in particular of at least 30%, of the length (lₐ), projected into the axial direction, of the base elevation part (8a).

6. Pneumatic vehicle tyre according to any one of Claims 1 to 5, **characterized in that** the depth of the grooves (10, 11) is up to 2.0 mm, and the width (b_{N1}, b_{N2}) of the grooves (10, 11) is at least 40% of the width (b₁) of the associated transverse channel (6, 7).

7. Pneumatic vehicle tyre according to any one of Claims 1 to 6, **characterized in that** the maximum height (hₘₐₓ, ₐ) of the base elevation part (8a) with the greater maximum height (hₘₐₓ, ₐ) is 40% to 100%, in particular 45% to 85%, and particularly preferably at least 50%, of the depth (t₁) of the associated transverse channel (6, 7), and **in that** the maximum height (hₘₐₓ, _{bc}) of the base elevation part (8b, 8c) with the smaller maximum height (hₘₐₓ, _{bc}) is 20% to 30%, in particular 23% to 27%, of the depth (t₁) of the associated transverse channel (6, 7).

8. Pneumatic vehicle tyre according to any one of Claims 1 to 7, **characterized in that** the base elevation part (8b, 8c) with the smaller maximum height (hₘₐₓ, _{bc}) is provided with a depression (12) which adjoins the base elevation part (8a) with the greater maximum height (hₘₐₓ, ₐ) and which extends to the channel flanks (7a) and which has a width of 0.7 mm to 3.0 mm, in particular of 1.0 mm to 2.0 mm, and a depth of 0.3 mm to 2.0 mm, in particular of 0.5 mm to 1.0 mm.

9. Pneumatic vehicle tyre according to any one of Claims 1 to 8, **characterized in that** on at least one side, in particular on each side, of the base elevation (8, 8'), a depression (9) with a width (b_{V1}) of 0.7 mm to 3.0 mm, in particular of 1.0 mm to 2.0 mm, and a depth (t_{V1}) of 0.3 mm to 2.0 mm, in particular of 0.5 mm to 1.0 mm, is formed on the channel base (7b) of the transverse channel (6, 7).

10. Pneumatic vehicle tyre according to any one of Claims 1 to 9, **characterized in that** base elevations (8^{I}) are provided which are each composed of two base elevation parts of different maximum height.

11. Pneumatic vehicle tyre according to any one of Claims 1 to 10, **characterized in that** base elevations (8) are provided which are each composed of three base elevation parts (8a, 8b, 8c), wherein the middle base elevation part (8b) is the tallest.

12. Pneumatic vehicle tyre according to Claims 10 and 11, **characterized in that** the base elevations (8^{I}) with exactly two base elevation parts are formed in a transverse channel (6) of a middle profile block row (2), and
**in that** the base elevations (8) with exactly three base elevation parts (8a, 8b, 8c) are formed in a transverse channel (7) of a shoulder-side profile block row (3).

13. Pneumatic vehicle tyre according to any one of Claims 1 to 12, **characterized in that** the base elevation parts (8a, 8b, 8c) are each delimited in a radial direction by a top surface (8a') which, in the regions that are free from grooves (10, 11), runs parallel to the tread periphery.

14. Pneumatic vehicle tyre according to any one of Claims 1 to 13, **characterized in that** the base elevation (8, 8^{I}) has a length (l₂), projected into the axial direction, of 30% to 50%, in particular of 25% to 40%, of the length (l₁), projected into the axial direction, of the transverse channel (6, 7).

15. Pneumatic vehicle tyre according to any one of Claims 1 to 14, **characterized in that**, on the channel base (7b) of the transverse channel (6, 7), there is formed a channel base channel (7c) which is narrower than the transverse channel (6, 7) and which has a depth (t₁') of 15% to 25% of the depth (t₁) of the transverse channel (7) and a width (b₁') of 40% to 60% of the width (b₁) of the transverse channel (7).

## Revendications

1. Pneumatique de véhicule avec une bande de roulement avec au moins une rangée de blocs de profil (2, 3), qui est divisée en une pluralité de blocs de profil (2a, 3a) par des gorges transversales (6, 7) s'étendant par rapport à la direction axiale selon un angle (α, β) de jusqu'à 50°, présentant des flancs de gorges (7a), des gorges transversales (6, 7) étant prévues, dans lesquelles est réalisé respectivement un soulèvement de base (8, 8^{I}) réduisant localement la profondeur (t₁) de la gorge transversale (6, 7), reliant entre eux des blocs de profil (2a, 3a) successifs dans la direction circonférentielle, le soulèvement de base (8, 8^{I}) présentant au moins deux parties de soulèvement de base (8a, 8b, 8c) de hauteur maximale différente (hₘₐₓ, ₐ, hₘₐₓ, _{bc}),
**caractérisé en ce que**
sur les parties de soulèvement de base (8a, 8b, 8c), respectivement au milieu, est réalisée au moins une rainure (10, 11) s'étendant dans la direction d'extension de la gorge transversale (6, 7) et sortant au moins d'un côté de la partie de soulèvement de base respective (8a, 8b, 8c), qui présente dans la direction radiale une profondeur (t_{N1}, t_{N2}) de 0,5 mm à 3,0 mm et une largeur (b_{N1}, b_{N2}) de 35 % à 50 % de la largeur (b₁) de la gorge transversale (6, 7) correspondante.

2. Pneumatique de véhicule selon la revendication 1, **caractérisé en ce que** dans au moins une des parties de soulèvement de base (8b, 8c), la rainure (11) traverse la partie de soulèvement de base (8b, 8c).

3. Pneumatique de véhicule selon la revendication 2, **caractérisé en ce qu'**au moins dans la ou les parties de soulèvement de base (8b, 8c) ayant la hauteur maximale la plus petite (h_{max,bc}), la rainure (11) traverse la partie de soulèvement de base (8b, 8c).

4. Pneumatique de véhicule selon l'une quelconque des revendications 1 à 3, **caractérisé en ce que** la partie de soulèvement de base (8a) ayant la hauteur maximale la plus grande (hₘₐₓ, ₐ) est pourvue de deux rainures (10) sortant sur des côtés différents, notamment alignées l'une sur l'autre.

5. Pneumatique de véhicule selon la revendication 4, **caractérisé en ce que** les rainures (10) qui sortent sur différents côtés de la partie de soulèvement de base (8a) présentent une longueur (I_{N1}) projetée dans la direction axiale de 20 % à 40 %, notamment d'au moins 30 %, de la longueur (lₐ) de la partie de soulèvement de base (8a) projetée dans la direction axiale.

6. Pneumatique de véhicule selon l'une quelconque des revendications 1 à 5, **caractérisé en ce que** la profondeur des rainures (10, 11) est de jusqu'à 2,0 mm et la largeur (b_{N1} b_{N2}) des rainures (10, 11) est d'au moins 40 % de la largeur (b₁) de la gorge transversale (6, 7) associée.

7. Pneumatique de véhicule selon l'une quelconque des revendications 1 à 6, **caractérisé en ce que** la hauteur maximale (hₘₐₓ, ₐ) de la partie de soulèvement de base (8a) ayant la hauteur maximale la plus grande (hₘₐₓ, ₐ) est de 40 % à 100 %, notamment de 45 % à 85 %, et de manière particulièrement préférée d'au moins 50 % de la profondeur (t₁) de la gorge transversale (6, 7) associée et **en ce que** la hauteur maximale (hₘₐₓ, _{bc}) de la partie de soulèvement de base (8b, 8c) ayant la hauteur maximale la plus petite (hₘₐₓ, _{bc}) est de 20 % à 30 %, notamment de 23 % à 27 %, de la profondeur (t₁) de la gorge transversale (6, 7) associée.

8. Pneumatique de véhicule selon l'une quelconque des revendications 1 à 7, **caractérisé en ce que** la partie de soulèvement de base (8b, 8c) ayant la hauteur maximale la plus petite (hₘₐₓ, _{bc}) est pourvue d'un creux adjacent à la partie de soulèvement de base (8a) ayant la hauteur maximale la plus grande (hₘₐₓ, ₐ), qui s'étend jusqu'aux flancs de gorge (7a) et qui présente une largeur de 0,7 mm à 3,0 mm, notamment de 1,0 mm à 2,0 mm, ainsi qu'une profondeur de 0,3 mm à 2,0 mm, notamment de 0,5 mm à 1,0 mm.

9. Pneumatique de véhicule selon l'une quelconque des revendications 1 à 8, **caractérisé en ce qu'**un creux (9) ayant une largeur (b_{V1}) de 0,7 mm à 3,0 mm, notamment de 1,0 mm à 2,0 mm, et une profondeur (t_{V1}) de 0,3 mm à 2,0 mm, notamment de 0,5 mm à 1,0 mm, est réalisé au fond de gorge (7b) de la gorge transversale (6, 7) sur au moins un, notamment sur chaque côté du soulèvement de base (8, 8').

10. Pneumatique de véhicule selon l'une quelconque des revendications 1 à 9, **caractérisé en ce qu'**il est prévu des soulèvements de base (8^{I}) qui se composent chacun de deux parties de soulèvement de base de hauteur maximale différente.

11. Pneumatique de véhicule selon l'une quelconque des revendications 1 à 10, **caractérisé en ce qu'**il est prévu des soulèvements de base (8) qui se composent chacun de trois parties de soulèvement de base (8a, 8b, 8c), la partie de soulèvement de base centrale (8b) étant la plus élevée.

12. Pneumatique de véhicule selon les revendications 10 et 11, **caractérisé en ce que** les soulèvements de base (8^{I}) sont réalisés avec exactement deux parties de soulèvement de base dans une gorge transversale (6) d'une rangée de blocs de profil centrale (2) et
**en ce que** les soulèvements de base (8) sont réalisés exactement trois parties de soulèvement de base (8a, 8b, 8c) dans une gorge transversale (7) d'une rangée de blocs de profil (3) côté épaulement.

13. Pneumatique de véhicule selon l'une quelconque des revendications 1 à 12, **caractérisé en ce que** les parties de soulèvement de base (8a, 8b, 8c) sont délimitées chacune dans la direction radiale par une surface de recouvrement (8a') qui s'étend parallèlement à la périphérie de la bande de roulement dans les zones exemptes de rainures (10, 11).

14. Pneumatique de véhicule selon l'une quelconque des revendications 1 à 13, **caractérisé en ce que** le soulèvement de base (8, 8^{I}) présente une longueur (l₂) projetée dans la direction axiale de 30 % à 50 %, notamment de 25 % à 40 %, de la longueur (l₁) de la gorge transversale (6, 7) projetée dans la direction axiale.

15. Pneumatique de véhicule selon l'une quelconque des revendications 1 à 14, **caractérisé en ce qu'**une gorge de fond de gorge (7c) conçue plus étroite que la gorge transversale (6, 7) est réalisée au fond de gorge (7b) de la gorge transversale (6, 7), laquelle présente une profondeur (t₁') de 15 % à 25 % de la profondeur (t₁) de la gorge transversale (7) et une largeur (b₁') de 40 % à 60 % de la largeur (b₁) de la gorge transversale (7).
